# EUROPÄISCHE PATENTANMELDUNG

(11) **EP 0 538 636 A1**
(43) Veröffentlichungstag der Anmeldung: **28.04.1993**
(21) Anmeldenummer: 92116322.6
(22) Anmeldetag: 24.09.1992
(51) Int. Cl.: B29C 65/24

(54) **Verfahren und Vorrichtung zum Heisssiegeln von Packstoffen**

(30) Priorität: 23.10.1991 DE 4134921
(71) Anmelder: ROBERT BOSCH GMBH, 70442 Stuttgart (DE)
(72) Erfinder: Liede, Dieter, W-7141 Möglingen (DE)

(57) **Zusammenfassung**

Es wird ein Verfahren und eine Vorrichtung zum Heißsiegeln von Packstoffen vorgeschlagen, wobei eine Packstofflage von außen durch Kontakt erwärmt wird. Um Unebenheiten der Siegelstelle auszugleichen, hat das Siegelwerkzeug (10, 20, 30) ein mit dem Packstoff in Kontakt bringbares Kissen (12, 21, 31) aus einem hitzebeständigen elastischen Werkstoff. Zum Übertragen von Wärme auf das Kissen wird dieses mit seiner Siegelfläche über eine bestimmte Zeitdauer mit einem beheizten Körper (15, 23, 33) in Kontakt gebracht.

## Beschreibung

### Stand der Technik

Die Erfindung geht aus von einem Verfahren zum Heißsiegeln von Packstoffen nach dem Oberbegriff des Anspruchs 1. In der Verpackungstechnik ist es weit verbreitet, aus heißsiegelbaren oder schweißbaren Packstoffen bestehende Verpackungsbehälter durch Heißsiegeln zu verschließen. Dabei werden die zu verklebenden Abschnitte der Packstoffe, beispielsweise mit Heißsiegellack oder mit einem thermoplastischen Kunststoff beschichtete Papiere, Metallfolien und dergleichen, unter der Einwirkung von Druck und Wärme verbunden, welche von mit dem Packstoff in Kontakt gebrachten Siegelwerkzeugen aufgebracht wird. Die Siegelwerkzeuge werden durch eingebaute Heizeinrichtungen auf eine bestimmte Temperatur erhitzt und geregelt. Soweit die Siegelbereiche plan sind, lassen sich mit festen Heißsiegelbacken aus Metall, in denen eine Heizeinrichtung integriert ist, dichte Nähte erzielen. Undichtigkeiten treten auf, wenn die Siegelbereiche uneben sind, wie beispielsweise bei Beutelverschlüssen, in denen durch Falten Übergänge von zwei zu mehreren Lagen vorhanden sind, oder bei Hohlglasbehältern, deren Mündungsrand herstellungsbedingt Unebenheiten aufweist, auf dem eine dünne, heißsiegelbar beschichtete Deckelfolie befestigt werden soll. Um die Unebenheiten auszugleichen, hat man die Siegelwerkzeuge schon mit einem die Siegelfläche bildenden Kissen aus einem hitzebeständigen elastischen Kunststoff ausgerüstet. Da solche Werkstoffe, wie Silikonkautschuk, schlechte Wärmeleiteigenschaften haben, leidet der Wärmeübergang vom metallischen Träger zum und durch das Kissen, so daß ein Siegelvorgang eine lange Zeitdauer beansprucht und dadurch die Leistung solcher Siegelwerkzeuge gering ist.

Um die Wärmeleitung eines elastischen Druckkissens in einem Schließkopf zu erhöhen, ist es bekannt, in den elastischen Werkstoff des Druckkissens ein Metallpulver einzulagern (DE-OS 31 05 911). Durch das Metallpulver wird jedoch die Elastizität und die Betriebsstandzeit des Kissens eingeschränkt.

### Vorteile der Erfindung

Das erfindungsgemäße Verfahren mit den kennzeichnenden Merkmalen des Anspruchs 1 hat den Vorteil, daß die Wärmeübertragung in das elastische Kissen des Werkzeugs von dessen Siegelfläche her erfolgt, so daß die Siegelfläche, die anschließend mit der zu versiegelnden Stelle in Kontakt gebracht wird, zu Beginn des Siegelvorgangs die höchste Temperatur aufweist, ohne daß das Kissen beim Erwärmen temperaturüberlastet wird. Ferner wird durch die höchste Temperatur an der Siegelfläche des Kissens ein Erwärmen der Siegelstelle des Packstoffs auf Siegeltemperatur innerhalb kurzer Zeit erreicht.

Eine Vorrichtung zum Durchführen des erfindungsgemäßen Verfahrens mit den Merkmalen des Anspruchs 6 hat den Vorteil, daß eine zu versiegelnde Packung jeweils während der Zeit, während der die Siegelfläche des Siegelwerkzeugs in Kontakt mit dem beheizten Körper ist, gewechselt werden kann, so daß mehrere Verpackungsbehälter der Reihe nach taktweise versiegelt werden können.

Mit der Vorrichtung mit den Merkmalen des Anspruchs 11 kann vorteilhaft ein Packstoffband fortlaufend auf ein Substrat aufgesiegelt werden.

### Zeichnung

Ausführungsbeispiele der Erfindung sind in der Zeichnung dargestellt und werden im folgenden näher beschrieben. Es zeigen Figur 1 eine Vorrichtung zum Heißsiegeln eines Deckplättchens auf einen Hohlglasbehälter vereinfacht in Seitenansicht, Figur 2 eine Vorrichtung zum Versiegeln des Halses einer Beutelpackung vereinfacht in Seitenansicht und Figur 3 eine Vorrichtung zum fortlaufenden Versiegeln eines heißsiegelfähigen Streifens auf eine Substratbahn in Seitenansicht.

### Beschreibung der Ausführungsbeispiele

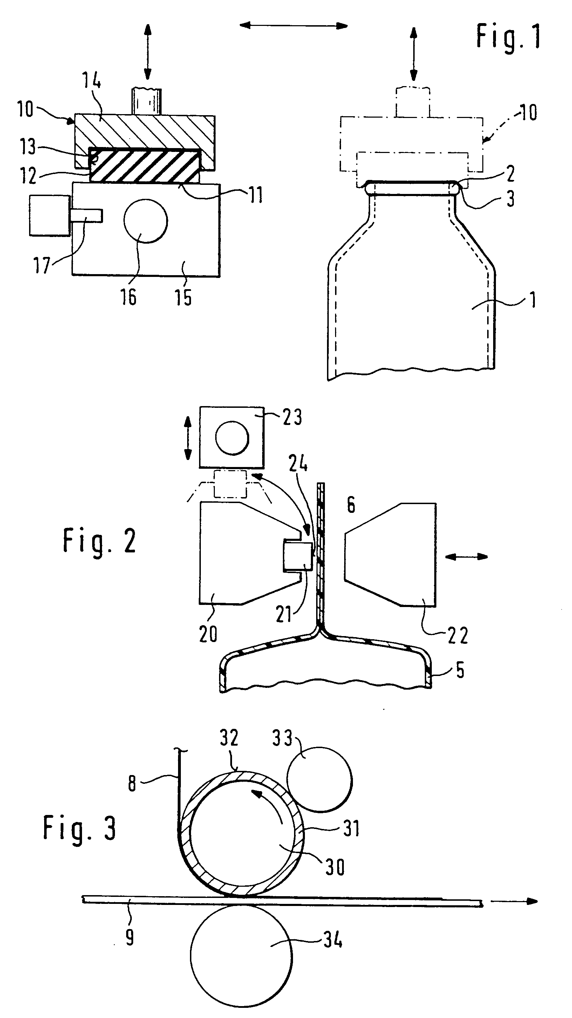

Bei dem Ausführungsbeispiel nach Figur 1 wird ein Hohlglasbehälter 1 mit einem Deckelplättchen 3 dicht verschlossen, das aus einer Aluminiumfolie mit einer Siegelschicht aus einem Heißsiegellack oder einem thermoplastischen Kunststoff auf der Innenseite besteht. Das Deckelplättchen 3 wird zunächst auf den Mündungsrand 2 des Behälters 1 gelegt und darauf mit einem Siegelstempel 10 auf den Mündungsrand 2 gepreßt, wobei unter der Einwirkung von Druck und Wärme die Siegelschicht des Deckplättchens 3 mit der Oberfläche des Mündungsrandes 2 verklebt.

Die auf dem Deckelplättchen 3 anliegende Siegelfläche 11 des Siegelstempels 10 wird von einer dicken, nachgiebigen Scheibe 12 gebildet, die aus einem hitzebeständigen Silikon- oder Fluorkautschuk oder aus einem hitzebeständigen Elastomer besteht. Die ein Kissen bildende Scheibe 12 ist in einer Ausnehmung 13 eines Halters 14 fest eingesetzt. Zum Übertragen von Wärme in den Siegelstempel 10, insbesondere in dessen elastische Scheibe 12, dient ein beheizter blockförmiger Körper 15, mit dem die Scheibe 12 mit ihrer Siegelfläche 11 zeitweilig in Kontakt gebracht wird (Figur 1). In Abhängigkeit von der Zeitdauer und der Oberflächentemperatur des beheizten Körpers 15 fließt eine bestimmte Wärmemenge in die Scheibe 15 und erwärmt diese. Da die Wärmeleitfähigkeit der aus Silikon-Kautschuk bestehenden Scheibe 12 gering ist, erreicht deren Siegelfläche 11 nahezu die Temperatur der Oberfläche des beheizten Körpers 15, beispielsweise 300° C, und es entsteht ein starkes Temperaturgefälle zum Halter 14 hin, so daß in diesen wenig Wärme abfließt. Nachdem der Siegelstempel 10 bzw. dessen Scheibe 12 auf diese Weise erwärmt worden ist, wird der Siegelstempel 10 auf ein auf einen Behälter 1 aufgelegtes Deckelplättchen 3 aufgedrückt (Figur 1, strichpunktiert). Durch Übergang von Wärme in und durch die Aluminiumfolie in die Siegelschicht des Deckelplättchens 3 schmilzt die Siegelschicht und verbindet sich bei Erwärmung des Mündungsrandes 2 mit diesem. Nach dem Entfernen des Siegelstempels 10 von der Siegelstelle kühlt das Deckelplättchen 3 schnell ab, so daß die Schmelze erstarrt und sich zu einer dichten Naht verfestigt.

Zum Versiegeln mehrerer Behälter 1 nacheinander wird der Siegelstempel 10 wechselweise mit dem beheizten Körper 15 und mit jeweils einem Deckelplättchen 3 auf einem Behälter 1 in Kontakt gebracht. Dazu ist der beheizte Körper 15 nahe neben der Siegelstation fest angeordnet, und der Siegelstempel 15 wird taktweise auf einer aus vertikalen und translatorischen Abschnitten zusammengesetzten Bahn zwischen der Siegelstelle und dem Körper 15 hin- und herbewegt. Während der Aufwärmphase wird jeweils ein versiegelter Behälter 1 aus der Siegelstation heraus und ein zu verschließender Behälter 1 in diese hineingefördert. Es können auch mehrere Siegelstempel an einer taktweise gedrehten Fördereinrichtung angeordnet sein, die nacheinander mit dem beheizten Körper 15 und mit einem auf einen Behälter 1 aufzusiegelnden Deckelplättchen 3 in Kontakt gebracht werden.

Um während einer bestimmten Zeitdauer, während der der Siegelstempel 10 mit dem beheizten Körper 15 in Kontakt ist, eine bestimmte Wärmemenge in dessen Scheibe 12 zu übertragen, wird der Körper 15 vorzugsweise mit einer elektrischen Heizpatrone 16 erwärmt, wobei der Heizstrom von einem Temperaturfühler 17 gesteuert wird.

Ergänzend wird bemerkt, daß das elastische Kissen des Siegelstempels 10 entsprechend der Form der Siegelnaht auch als Ring ausgebildet sein kann.

Das Ausführungsbeispiel nach Figur 2 ist zum Heißsiegeln des flach gefalteten Kopfverschlusses 6 einer Beutelpackung 5 eingerichtet, die aus einem Packstoff geformt ist, der auf der Innenseite eine heißsiegelfähige Schicht hat. Solche flach gelegten Faltverschlüsse haben abschnittsweise im Bereich der Längsnaht und V-förmig eingezogener Seitenfalten vier Lagen, so daß in der langgestreckten Naht Stufen vorhanden sind, in deren Bereich sich die Siegelfläche des Siegelwerkzeugs elastisch anpassen muß, wenn eine dichte Naht erzeugt werden soll. Das Ausführungsbeispiel nach Figur 2 hat einen beheizbaren, langgestreckten Siegelbacken 20 mit einer eingesetzten Leiste 21 aus einem elastischen, wärmebeständigen Werkstoff und einen Gegenbacken 22, der taktweise gegen den Siegelbacken 20 bewegbar ist. Der Siegelbacken 20 ist taktweise um 90° schwenkbar, so daß er in der einen Stellung (Figur 2) auf den Gegenbacken 22 und in der anderen Stellung (Figur 2, strichpunktiert) auf einen beheizten Körper 23 ausgerichtet ist, der gegen die Leiste 21 anpreßbar beweglich ist. In Kontakt mit dem beheizten Körper 23 übernimmt die Leiste 21 Wärme von diesem und übergibt diese Wärme nach Verschwenken des Siegelbackens 20 in die Siegelstellung an die Nahtstelle des Kopfverschlusses 6 der Beutelpackung 5, wenn dieser mit dem Gegenbacken 22 gegen die Siegelfläche 24 der Leiste 21 gedrückt wird, so daß eine dichte Siegelnaht gebildet wird.

Das Ausführungsbeispiel nach Figur 3 ist zum fortlaufenden Versiegeln eines heißsiegelbaren Streifens 8 auf eine Substratbahn 9 geeignet. Auf einer umlaufenden Trägerwalze 30 ist ein Ring 31 oder eine Hohlwalze aus einem elastischen hitzebeständigen Werkstoff befestigt. Parallelachsig zu der Trägerwalze 30 ist eine beheizte Walze 33 angeordnet, die sich auf der Außenfläche, der Siegelfläche 32 des Ringes 31 unter Druck abwälzt. Ferner ist der Trägerwalze 30 eine Gegendruckwalze 34 parallelachsig zugeordnet. Zum Aufsiegeln des Streifens 8 auf die Bahn 9 werden diese aufeinanderliegend von dem umlaufenden Ring 31 und der unter Druck anliegenden Gegenwalze 34 gleichförmig vorgezogen. Der Streifen 8 wird vor der Andrück- bwz. Siegelstelle über einen bestimmten Winkelbereich mit der Siegelfläche 32 des zuvor von der Walze 33 erhitzten Ringes 31 in Kontakt gebracht und dabei erhitzt, so daß an der Siegelstelle ein Versiegeln mit der Substratbahn 9 stattfindet.

Damit die zum Siegeln erforderliche Wärme und die von dem Halter des Kissens abfließende Wärme nicht insgesamt durch Kontakterwärmen des Kissens in dieses eingebracht werden muß, ist es möglich, in den Träger des Kissens eine Heizeinrichtung zu integrieren, die das Siegelwerkzeug auf eine bestimmte Stütztemperatur erwärmt.

Bei den oben beschriebenen Ausführungsbeispielen wird das Kissen des Siegelwerkzeuges jeweils durch Kontakt mit einem erwärmten Körper mit Wärme aufgeladen. Ein solches Aufladen mit Wärme kann auch durch Konvektion mit einem erhitzten Gas und / oder durch Strahlung mit einem Wärmestrahler durchgeführt werden.

## Patentansprüche

1. Verfahren zum Heißsiegeln von heißsiegelbaren oder schweißbaren Packstoffen durch Übertragen von Druck und Wärme mit Hilfe eines erhitzten Werkzeugs, dessen Siegelfläche an einem Kissen aus einem nachgiebigen Packstoff gebildet ist und zeitweise mit dem Packstoff in Kontakt gebracht wird, dadurch gekennzeichnet, daß das Kissen (12, 21, 31) vor jedem Siegelvorgang von seiner Siegelfläche her mit Wärme aufgeladen wird.

2. Verfahren nach Anspruch 1, dadurch gekennzeichnet, daß das Kissem (12, 21, 31) von seiner Siegelfläche her durch Kontakt , durch Konvektion und / oder Strahlung mit Wärme aufgeladen wird.

3. Verfahren nach Anspruch 2, dadurch gekennzeichnet, daß das Kissen (12, 21, 31) mit einer Siegelfläche (11, 24, 32) vor jedem Siegelvorgang vorübergehend mit einem erhitzten Körper (15, 23, 33) in Kontakt gebracht wird.

4. Verfahren nach Anspruch 3, dadurch gekennzeichnet, daß die Siegelfläche (11, 24, 32) des Kissens (12, 21, 31) während einer bestimmten Zeitdauer mit dem erhitzten Körper (15, 23, 33) in Kontakt gebracht wird, der auf eine bestimmte Temperatur erhitzt wird.

5. Verfahren nach Anspruch 3, dadurch gekennzeichnet, daß die Siegelfläche (11, 24, 32) des Kissens (12, 21, 31) solange mit dem erhitzten Körper (15, 23, 33) in Kontakt gebracht wird, bis das Kissen eine bestimmte Temperatur erreicht hat.

6. Vorrichtung zum Durchführen des Verfahrens nach einem der vorhergehenden Ansprüche 1 bis 5, mit einem beweglichen Siegelwerkzeug, das einen Träger und ein von diesem aufgenommenes elastisches Kissen mit einer Siegelfläche hat, welches zeitweise mit der Siegelstelle des Packstoffs in Kontakt gebracht wird, dadurch gekennzeichnet, daß die Siegelfläche (11, 24, 32) des Siegelwerkzeugs (10, 20, 30) zwischen einer Heizquelle und der Siegelstelle bewegbar ist.

7. Vorrichtung nach Anspruch 6, dadurch gekennzeichnet, daß das Siegelwerkzeug mit der Siegelfläche (11, 24, 32) wechselweise mit einem beheizten Körper (15, 23, 33) und mit einer Siegelstelle des Packstoffs in Kontakt bringbar ist.

8. Vorrichtung nach Anspruch 7, dadurch gekennzeichnet, daß das Siegelwerkzeug (10) in einer vertikalen und translatorischen Bahn bewegbar ist.

9. Vorrichtung nach Anspruch 7, dadurch gekennzeichnet, daß das Siegelwerkzeug (20) schwenkbar angeordnet ist.

10. Vorrichtung nach Anspruch 7, dadurch gekennzeichnet, daß mehrere Siegelwerkzeuge an einer Fördereinrichtung angeordnet sind, die nacheinander jeweils zunächst mit dem beheizten Körper und darauf mit der Siegelstelle in Kontakt bringbar sind.

11. Vorrichtung nach Anspruch 6, dadurch gekennzeichnet, daß das Siegelwerkzeug aus einer umlaufenden Walze (30) mit einem diese umgebenden ringförmigen Kissen (31) aus elastischem Werkstoff besteht, an dem über einem bestimmten Winkelbereich der zu versiegelnde Packstoff anliegt, und daß um einen bestimmten Winkel versetzt das ringförmige Kissen an einer umlaufenden, beheizten Walze (33) abwälzt.

12. Vorrichtung nach einem der Ansprüche 6 bis 11, dadurch gekennzeichnet, daß in dem Siegelwerkzeug (10, 20, 30) eine eine Stütztemperatur erzeugende Heizeinrichtung integriert ist.
